# FASCICULE DE BREVET EUROPEEN

(11) **EP 3 384 611 B1**
(45) Date de publication et mention de la délivrance du brevet: **07.04.2021**
(21) Numéro de dépôt: 16815891.3
(22) Date de dépôt: 28.11.2016
(51) Int. Cl.: H04B 7/185, H04W 28/08

(54) **PROCEDE DE DELESTAGE DE TRAFIC AU SEIN D'UNE CELLULE D'UN RESEAU MOBILE**
VERFAHREN ZUM OFFLOAD VON VERKEHR IN EINER MOBILNETZZELLE
METHOD FOR OFFLOADING TRAFFIC IN A MOBILE NETWORK CELL

(30) Priorité: 04.12.2015 FR 1561880
(43) Date de publication de la demande: 10.10.2018
(73) Titulaire: ORANGE, 75015 Paris (FR)
(72) Inventeur: JAZIRI, Aymen, 92140 Clamart (FR); NASRI, Ridha, 92120 Montrouge (FR)
(86) Numéro de dépôt international: PCT/FR2016/053123
(87) Numéro de publication internationale: WO 2017/093647

(56) Documents cités:
- EP-A1- 1 115 262
- EP-A1- 2 853 974
- EP-A1- 2 938 117
- WO-A1-01/20814
- WO-A1-02/01756
- WO-A1-2015/073687
- US-A- 5 828 962
- US-A1- 2009 098 850
- US-A1- 2013 163 565
- US-A1- 2014 277 854
- US-B1- 9 083 425

## Description

La présente invention concerne les communications dans un réseau mobile. Plus particulièrement, l'invention concerne le délestage (« *offload* » en anglais), au moyen de relais de télécommunications, du trafic dans des zones d'une cellule où le trafic de communications est significativement supérieur au trafic moyen dans la cellule ; par souci de brièveté, on désignera ci-dessous une telle zone par le mot anglais « *hotspot* »*.*

On rappelle qu'un relais de télécommunications est un équipement qui combine un récepteur et un émetteur radio, et qui est destiné à propager une liaison radio sur une distance relativement importante entre une station de base et le terminal mobile d'un usager du réseau. Un relais peut utiliser, pour l'émission et la réception, les mêmes bandes de fréquences (auquel cas on parle plus particulièrement de « répéteur »), ou (par exemple dans le cas des satellites de télécommunications) des bandes de fréquences différentes (auquel cas on parle plus particulièrement de « transpondeur »). De plus, un relais peut être passif ou proactif : dans le cas d'un relais passif, ce dernier amplifie et retransmet le signal reçu de la part d'un usager sans faire de traitement spécifique ; dans le cas d'un relais proactif, ce dernier peut notamment ordonnancer les communications avec les usagers, réserver des ressources réseau et configurer des paramètres réseau.

De manière classique, les opérateurs téléphoniques utilisent des relais fixes et/ou des relais mobiles (c'est-à-dire pouvant être déplacés facilement). En particulier, les relais mobiles placés dans des véhicules routiers (voitures, camionnettes, autobus, et ainsi de suite) présentent de nombreux avantages. Ainsi :
- ils peuvent se rendre sur place en cas d'évènements imprévus tels que des pannes réseau localisées, ou des rassemblements de personnes ;
- ils sont peu coûteux en termes de déploiement, d'entretien et de modernisation ;
- le transfert de communication (que l'on désignera ci-dessous par le terme anglais de « *handover* ») pour un terminal mobile depuis une station de base vers un relais mobile est simple à mettre en œuvre.

Ces relais mobiles classiques présentent toutefois plusieurs inconvénients. Ainsi :
- ils nécessitent un supplément de signalisation ;
- les communications entre un relais et un terminal d'abonné sont souvent perturbées par les bâtiments situés entre eux, d'où un effet de masque (« *shadowing* » en anglais).

Afin de remédier à ce dernier inconvénient, il a été proposé récemment de placer des relais mobiles dans des ballons d'hélium, afin que les communications entre, d'une part, un relais mobile et les terminaux mobiles qu'il dessert, et d'autre part ce relais mobile et la station de base qu'il relaye, soient en ligne de mire (« *line of sight* » en anglais), de façon à fournir une qualité de transmission optimale car ne souffrant pas des phénomènes d'évanouissement rapide (« *fast fading* » en anglais) et d'effet de masque. Cependant, ces relais placés dans des ballons présentent, eux aussi, certains inconvénients. Ainsi :
- les ballons doivent voler à une altitude assez élevée pour éviter les collisions avec les bâtiments ;
- les communications entre un ballon et un terminal mobile sont dégradées en raison de la distance importante qui les sépare ;
- toujours en raison de la distance importante qui les sépare, la puissance d'émission requise pour le terminal mobile est importante, d'où des problèmes d'exposition humaine aux radiations, et de décharge rapide de la batterie ;
- toujours en raison de la distance importante qui les sépare, la puissance d'émission requise pour le relais est importante, donc le ballon doit être muni d'une grosse batterie, ce qui augmente le poids du ballon ;
- le ravitaillement du relais mobile (batterie, entretien, et ainsi de suite) est difficile ;
- si le ballon est relié à la station de base *via* un lien filaire, le ravitaillement du relais est relativement facile, mais les déplacements du ballon d'un *hotspot* à un autre sont difficiles ; si, en revanche, le ballon est relié à la station de base *via* un lien non-filaire, le ravitaillement du ballon est relativement difficile, et par ailleurs la focalisation de ce lien sans-fil est instable en raison des mouvements du ballon dus aux courants d'air.

Le document US 2009/0098850 concerne un système de communications sans fil aéroporté comprenant un circuit configuré pour accéder à des informations décrivant une configuration d'une station de base terrestre inopérante.

Le document US 2013/0163565 décrit un procédé de communication s'appuyant sur un point d'accès mobile dans un système de communication radio.

La présente invention concerne donc un procédé de délestage du trafic de communications dans un réseau mobile, comprenant les étapes suivantes :
- une station de base détecte une congestion persistante dans une zone de la cellule dont elle assure la couverture, et
- la station de base dépêche vers ladite zone au moins un relais de télécommunications mobile.

Ledit procédé est remarquable en ce que ledit relais mobile est porté par un drone.

Ainsi, la présente invention propose d'utiliser des drones (volant à basse altitude) comme relais mobiles. Initialement conçus à des fins militaires, les drones connaissent depuis quelques années un grand succès dans le domaine des services de surveillance et de contrôle. Or les auteurs de la présente invention ont réalisé que cette technologie pouvait également présenter un grand intérêt dans le domaine des télécommunications. En effet, des progrès significatifs ont été réalisés récemment sur le plan des coûts de déploiement et d'entretien, ainsi que sur le plan de la fiabilité du contrôle de vol des drones. C'est pourquoi une architecture réseau reposant sur une flotte de drones peut être utilisée avantageusement pour assurer le délestage du trafic dans une cellule d'un réseau mobile.

Grâce à ces dispositions, la station de base de la cellule, et les terminaux mobiles situés dans le *hotspot,* voient leur Rapport Signal sur Bruit (« *Signal over Noise Ratio* », ou SNR en anglais) augmenter. Il en résulte, d'une part, une réduction du nombre de bits de redondance requis, et donc une diminution du débit total nécessaire pour le codage source et de canal, et donc, *in fine,* une diminution de la charge de la cellule. D'autre part, l'augmentation du SNR permet avantageusement à la station de base, ainsi qu'aux terminaux mobiles du *hotspot,* de réduire leurs puissances d'émission.

La solution selon l'invention présente de nombreux autres avantages. Ainsi :
- les drones peuvent être déployés très rapidement aux endroits souhaités ;
- les drones peuvent se poser de manière stable près des *hotspots,* par exemple en des points d'attachement prédéterminés (tels qu'un réverbère ou un bâtiment), et même suivre les terminaux mobiles concernés (par exemple, une foule en marche) dans leur déplacements au sein de la cellule, en « sautant » d'un point d'attache à un autre ;
- les communications entre, d'une part, un drone et les terminaux mobiles qu'il dessert, et d'autre part ce drone et la station de base qu'il relaye, sont en ligne de mire ;
- chaque drone possède, durant son déplacement, une base de données où tous les trajets entre les points d'attachement sont définis ; le drone peut donc circuler à basse altitude sans risque d'accident ;
- une fois le drone posé, il peut aisément établir un lien filaire ou non-filaire stable avec la station de base ;
- la distance entre un drone et un terminal mobile étant courte, la puissance d'émission requise aussi bien pour le terminal mobile que pour le drone est faible ;
- un relais installé dans un drone est peu coûteux en termes d'équipements embarqués ; pour pouvoir communiquer, il doit être équipé uniquement d'un module RF (Radio Fréquence) ; or un tel module RF ne représente qu'une faible partie du coût habituel d'une station radio, car, s'il doit comprendre une RRH (initiales des mots anglais « *Remote Radio Head* » signifiant «Tête Radio Eloignée »), il n'a nul besoin de comprendre une BBU (initiales des mots anglais « *Base Band Unit* » signifiant « Unité de Bande de Base ») ;
- dès qu'un drone se pose, il active les composants RF et désactive les composants qui lui permettent de voler ; la consommation électrique d'un drone est donc faible, surtout s'il est alimenté par l'énergie solaire (comme on peut l'envisager si la surface des ailes du drone est assez grande) ;
- le ravitaillement du drone est aisé puisqu'il peut se poser directement sur une aire de ravitaillement pour recharger ses batteries ; on peut par exemple installer des équipements de ravitaillement au sommet de quelques réverbères répartis dans la cellule.

L'invention permet donc de répondre efficacement à la nécessité d'absorber une congestion constatée, ou prévue, dans une zone d'une cellule du réseau mobile, par exemple en cas de rassemblement de courte durée ou de catastrophe naturelle, et ce, de façon peu coûteuse en termes de matériels et de consommation d'énergie. De plus, l'invention améliore sensiblement le ressenti et la satisfaction des clients d'un opérateur mobile.

Selon des caractéristiques particulières, suite à l'atterrissage dudit drone près de ladite zone congestionnée, au moins un paramètre de la station de base et/ou dudit relais est configuré de manière à ce que le drone prenne en charge les terminaux mobiles situés dans la zone congestionnée.

Grâce à ces dispositions, les terminaux mobiles du *hotspot* se détachent de la station de base, et s'attachent au relais de télécommunications du drone. De plus, les terminaux mobiles sur le point d'initier une communication, et qui sont situés dans le *hotspot,* s'attachent directement au drone.

Selon des caractéristiques encore plus particulières, suite à la prise en charge desdits terminaux mobiles, le drone exécute un algorithme d'ordonnancement de ces terminaux mobiles.

Grâce à ces dispositions, les terminaux mobiles du hotspot sont ordonnancés pour leurs communications avec le relais (fonctionnant en mode « proactif » tel que défini ci-dessus), au lieu d'être ordonnancés pour leurs communications avec la station de base.

Selon d'autres caractéristiques particulières, la station de base met fin au rôle de relais joué par le drone lorsqu'elle constate une disparition persistante de ladite congestion.

Grâce à ces dispositions, on minimise les coûts d'exploitation, et l'on rend le drone disponible pour délester (le cas échéant) un autre *hotspot.*

Corrélativement, selon un deuxième aspect, l'invention concerne divers dispositifs.

Elle concerne ainsi, premièrement, un drone comprenant un relais de télécommunications mobile tel que défini à la revendication 6.

Les avantages offerts par ces drones sont essentiellement les mêmes que ceux offerts par les procédés corrélatifs succinctement exposés ci-dessus.

Selon des caractéristiques particulières, ledit relais garde en mémoire un ensemble planifié d'emplacements de stationnement possibles pour exercer ses fonctions de relais.

Grâce à ces dispositions, le message utilisé par la station de base pour indiquer à un drone où il doit se rendre peut être relativement court. Ces emplacements de stationnement sont de préférence prévus en des endroits stratégiques (couvrant notamment la plupart des zones où le signal de la station de base est médiocre, principalement à cause de l'effet de masque), par exemple au sommet d'un réverbère ou d'un bâtiment, de sorte que chaque drone puisse toujours disposer d'un emplacement où il peut être en ligne de mire avec la station de base à laquelle il est attaché.

L'invention concerne aussi, deuxièmement, une station de base comprenant des moyens pour détecter une congestion persistante dans une zone de la cellule dont elle assure la couverture. Ladite station de base est remarquable en ce qu'elle comprend des moyens pour :
- dépêcher vers ladite zone congestionnée un relais de télécommunications mobile porté par un drone, et
- configurer au moins un de ses paramètres et/ou des paramètres dudit relais de manière à ce que le relais prenne en charge les terminaux mobiles situés dans la zone congestionnée.

Les avantages offerts par cette station de base sont essentiellement les mêmes que ceux offerts par les procédés corrélatifs succinctement exposés ci-dessus.

On notera qu'il est possible de réaliser ces dispositifs dans le contexte d'instructions logicielles et/ou dans le contexte de circuits électroniques.

C'est pourquoi l'invention vise également un programme d'ordinateur téléchargeable depuis un réseau de communication et/ou stocké sur un support lisible par ordinateur et/ou exécutable par un microprocesseur. Ce programme d'ordinateur est remarquable en ce qu'il comprend des instructions pour l'exécution des étapes du procédé de délestage de trafic succinctement exposé ci-dessus, lorsqu'il est exécuté sur un ordinateur.

Selon un troisième aspect, l'invention concerne un système de délestage du trafic de communications dans un réseau mobile, comprenant au moins un relais mobile tel que décrit succinctement ci-dessus, et au moins une station de base telle que décrite succinctement ci-dessus.

Les avantages offerts par ce système sont essentiellement les mêmes que ceux offerts par le procédé de délestage de trafic décrit succinctement ci-dessus.

D'autres aspects et avantages de l'invention apparaîtront à la lecture de la description détaillée ci-dessous de modes de réalisation particuliers, donnés à titre d'exemples non limitatifs. La description se réfère aux figures qui l'accompagnent, dans lesquelles :
- la figure 1 représente l'état de congestion d'une cellule d'un réseau mobile en fonction de la charge de la cellule et de la distance entre un *hotspot* et la station de base de la cellule, et
- la figure 2 est un organigramme représentant les étapes du procédé de délestage selon un mode de réalisation de l'invention.

On notera pour commencer que l'on connaît diverses méthodes pour localiser un *hotspot.*

Ainsi, une première méthode, appelée « projection de trafic » (cf. la demande EP 1168866), est fondée sur des métriques définies et stockées au niveau de l'entité O&M (« *Operation and Maintenance Center* ») du réseau.

Une deuxième méthode (cf. A. Jaziri, R. Nasri et T. Chahed, « Traffic Hotspot localization in 3G and 4G wireless networks using OMC metric », in Proc. IEEE PIMRC, pages 270 à 274, septembre 2014) est fondée sur l'utilisation de cinq indicateurs de performance, à savoir la charge, les débits des cellules et des utilisateurs, le degré de voisinage, les statistiques de la distribution de l'Avance Temporelle (« *Timing Advance* » en anglais) et de l'angle d'arrivée, qui sont projetés sur une carte de couverture.

Une troisième méthode est fondée principalement sur les sondes et l'analyse des traces. Malgré son coût important, cette méthode est la plus utilisée dans les équipes opérationnelles. Selon cette méthode, la localisation se fait pour chaque utilisateur individuellement en exploitant les traces stockées dans des serveurs à grandes capacités de mémoire. Les traces les plus utilisées sont : des données GPS remontées par le mobile, la proximité d'un *hotspot* WiFi, le niveau de champ remonté par le mobile et l'identifiant de cellule. On peut aussi utiliser d'autres méthodes de localisation comme la triangulation (cf. A. Roxin et al., « Survey of Wireless Geolocation Techniques », in IEEE Globecom Workshops, 2007).

De plus, l'article de Q. Xu et al. intitulé « AccuLoc: practical localization of performance measurements in 3G networks » (Proc. of the ACM International Conference on Mobile Systems, Applications and Services, pages 183 à 196, 2011) exploite des prédictions sur la mobilité des utilisateurs de terminaux mobiles pour mieux estimer la localisation d'un *hotspot.*

La présente invention propose l'utilisation de drones essentiellement pour *délester* les *hotspots,* mais on notera que l'on peut aussi avantageusement utiliser des drones pour *détecter* des *hotspots.*

On va définir à présent divers indicateurs mentionnés ci-dessous dans la description d'un mode de réalisation de l'invention.
a- Modes de fonctionnement d'un drone
   - Inactif : le drone est à l'arrêt, avec une consommation d'énergie nulle ou extrêmement faible, et il ne sert aucun terminal mobile ;
   - Veille : le drone active plusieurs composants électriques dans un mode d'économie d'énergie ;
   - Actif : le drone se déplace vers la position d'un *hotspot* détecté, mais son module RF n'est pas encore activé pour servir des terminaux mobiles (i.e., le drone communique seulement avec la station de base) ;
   - Prêt : le relais s'est posé près du *hotspot,* et peut servir des terminaux mobiles.
b- États de congestion d'une cellule
   - Vert : la cellule n'est pas congestionnée ;
   - Jaune : une congestion peut se produire près du bord de la cellule ;
   - Rouge : la cellule fait face à un problème de congestion sérieux loin de la station de base ;
   - Bleu : un problème de congestion dans la cellule a été résolu.
c- Variables
   - Cell_Load : charge instantanée de la cellule, exprimée en nombre de ressources utilisées, ou en taux d'utilisation des ressources, à cet instant, par exemple :
      - dans la technologie GSM (Global System for Mobile Communications, ou 2G), le nombre d'intervalles de temps (« *time slots* » en anglais) occupés,
      - dans la technologie UMTS (Universal Mobile Telecommunications System, ou 3G), le taux d'utilisation des codes d'étalement et de puissance,
      - dans la technologie LTE (Long-Term Evolution, ou 4G), le nombre de PRB occupés (initiales des mots anglais « *Physical Resource Block* » signifiant « Bloc de Ressource Physique ») ;
   - Hotspot_position : distance entre un *hotspot* et la station de base de la cellule, calculée par un procédé de localisation de *hotspot* exécuté à intervalles de temps Timer_1 ;
   - N_UE : nombre d'utilisateurs servis par un drone donné ;
   - N_PRB : nombre de ressources disponibles réservées par un drone donné (par exemple, intervalles de temps en GSM, ou codes d'étalement et de puissance en UMTS, ou encore PRB en LTE).
d- Paramètres cellulaires
   - Load_Threshold_1 : seuil de charge cellulaire pour passer de l'état de congestion Vert à l'état de congestion Jaune ;
   - Load_Threshold_2 : seuil de charge cellulaire pour passer de l'état de congestion Jaune à l'état de congestion Rouge ;
   - Load_Threshold_3 : seuil de charge cellulaire permettant la désactivation du relais quand il n'y a aucune congestion ;
   - {Traffic_Point_i, i=1 ... n} : ensemble planifié d'emplacements de stationnement du drone dans la cellule, lesdits emplacements de stationnement étant repérés, par exemple, au moyen de coordonnées GPS (Global Positioning System) ;
   - Hotspot_0 : distance minimale par rapport à la station de base pour laquelle un délestage par relais répéteur peut être efficace ; en effet, dans le cas d'un drone portant un relais répéteur, la distance entre le *hotspot* et la station de base a de l'importance, car (comme l'ont montré des études classiques), si un *hotspot* se situe relativement près d'une station de base, le déploiement d'un relais est susceptible de dégrader les performances globales du système en raison des interférences entre les liens relais-station de base, et relais-terminal mobile ;
   - Selection_offset_D : facteur de compensation ajouté au niveau de champ réel, et dont on augmente la valeur lorsque l'on souhaite augmenter le nombre de terminaux mobiles s'attachant au drone lorsqu'ils initient une communication (élargissement de la zone de service du drone) ;
   - Handover_offset_D : facteur de compensation ajouté au niveau de champ réel, et dont on augmente la valeur lorsque l'on souhaite diminuer le nombre de terminaux mobiles connectés à un drone qui pourraient s'en détacher pour s'attacher à la station de base de la cellule à laquelle appartient ce drone ou éventuellement à une station de base d'une cellule voisine ;
   - Handover_hysteresis : hystérésis de *handover* entre la cellule et son drone, et dont on augmente la valeur lorsque l'on souhaite faciliter les *handovers* (dans les deux sens) entre la station de base et le drone.
e- Evènements
   - Event_DA1 : la charge cellulaire excède LoadThreshold_1 ;
   - Event_DA2 : la cellule fait face à un problème de congestion avec Cell_Load plus élevé que Load_Threshold_2 ;
   - Event_DA3 : soit le problème de congestion a disparu, soit le *hotspot* s'est approché de la station de base ;
   - Event_DA4 : le *hotspot* se déplace vers une autre cellule.
f- Minuteurs
   - Timer_1 : période séparant deux exécutions consécutives d'un algorithme de localisation de *hotspot* ;
   - Timer_2 : temps pour que le drone arrive près du *hotspot* ;
   - Timer_3 : temps pour passer du mode de Veille au mode Inactif ;
   - Timer_4 : temps pour passer de l'état de congestion Rouge à l'état de congestion Jaune ;
   - Timer_5 : temps pour désactiver le drone lorsque la cellule n'est plus congestionnée ;
   - Timer_6 : temps pour exécuter désactiver le drone lorsque le *hotspot* se déplace vers une autre cellule.

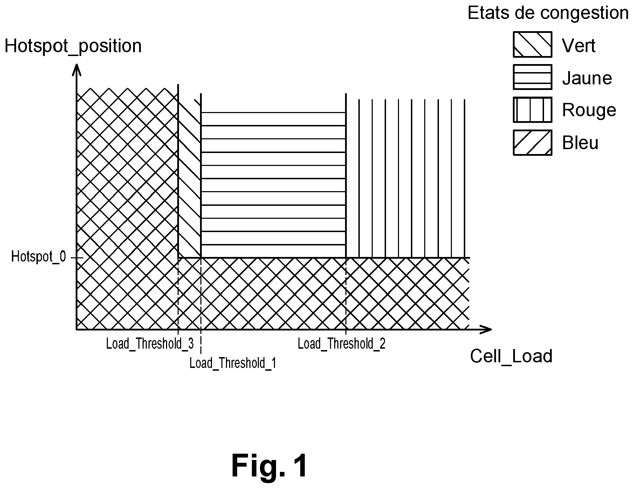

La **figure 1** représente l'état de congestion d'une cellule d'un réseau mobile en fonction de la charge Cell_Load et de la distance Hotspot_position. En référence aux états de congestion définis ci-dessus, les hachures parallèles à l'axe des abscisses couvrent le domaine de l'état de congestion Jaune, les hachures parallèles à l'axe des ordonnées couvrent le domaine de l'état de congestion Rouge, les hachures de pente (+45°) couvrent le domaine de l'état de congestion Bleu, et les hachures de pente (-45°) couvrent le domaine de l'état de congestion Vert.

L'Homme du Métier pourra naturellement définir les états de congestion d'une cellule sur la base d'autres indicateurs et d'autres seuils en sus, ou en remplacement, des indicateurs et seuils proposés ci-dessus.

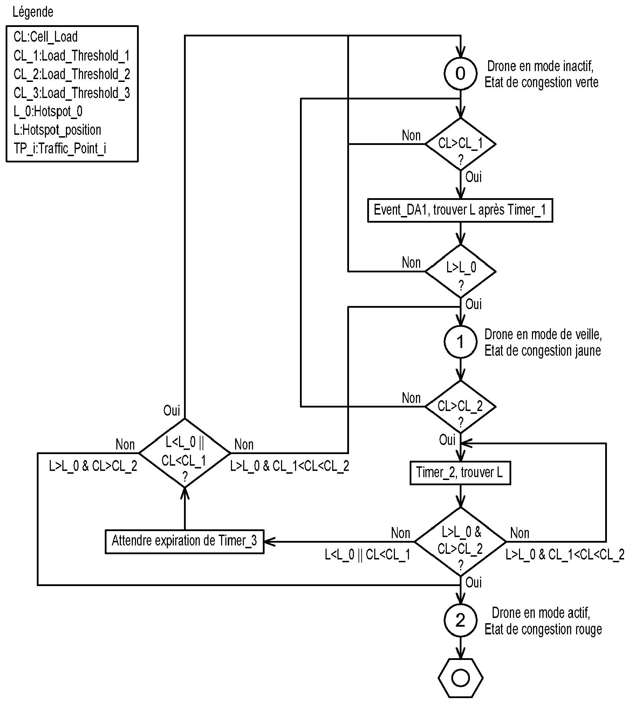

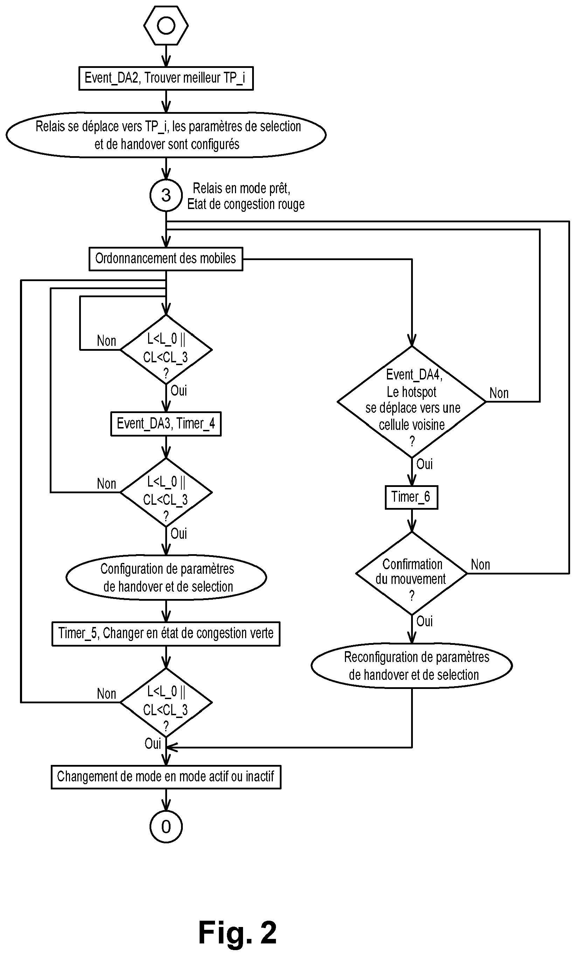

On va décrire à présent, en référence à la **figure 2****,** un mode de réalisation du procédé de délestage selon l'invention.

On notera qu'un drone selon l'invention peut communiquer avec la station de base de la cellule *via* un lien filaire ou non-filaire.

Lorsqu'au moins un drone de la flotte est destiné à communiquer avec la station de base de la cellule par lien filaire (par exemple par câble coaxial ou par fibre optique), on peut commodément installer une connexion à ce lien filaire en un ou plusieurs emplacements de stationnement {Traffic_Point_i}.

Dans le cas d'un lien non-filaire, un drone peut fonctionner en tant que relais répéteur (même bande de fréquences pour la station de base et le relais), ou en tant que relais transpondeur (bandes de fréquences distinctes pour la station de base et le relais). On peut même définir un mode de fonctionnement dynamique dans lequel le relais peut passer du mode transpondeur au mode répéteur, et vice-versa, en déployant une fonctionnalité d'adaptation dynamique de spectre (« *flexible spectrum* » en anglais). Lorsque le *hotspot* est relativement près de la station de base, le mode transpondeur permet d'éviter les pertes de qualité du signal dues aux interférences sur une même bande de fréquences ; toutefois, l'utilisation de transpondeurs est limitée aux mises en œuvre dans lesquelles les terminaux mobiles sont eux-mêmes capables de fonctionner sur des bandes de fréquences distinctes, ce qui n'est pas toujours le cas.

C'est pourquoi l'on s'intéressera plus particulièrement, dans le mode de réalisation décrit ci-dessous, au cas des relais répéteurs. De plus, on considérera le cas de relais « proactifs » (tels que définis ci-dessus), car ils permettent une gestion plus fine du délestage.

Dans ces conditions, la station de base et le drone communiqueront entre eux, de préférence, dans une bande de fréquences basses en FDD (initiales des mots anglais « *Frequency Division Duplexing* » signifiant « Duplexage en Fréquence »), ce qui est rendu possible par la portée étendue du drone en ligne de mire. Ce principe permet d'avoir une faible congestion dans le spectre licencié, et peu d'interférences avec d'autres applications dans le domaine radio ou avec des communications par satellite.

Quant aux communications entre le drone et les terminaux, elles utilisent de préférence le spectre licencié si les ressources nécessaires sont disponibles, et le spectre non-licencié dans le cas contraire.

Concernant le spectre non-licencié, l'utilisation du WiFi, qui est de fait une technologie disponible dans la plupart des smartphones commercialisés ainsi que dans d'autres dispositifs, permet aux opérateurs d'obtenir un revenu supplémentaire de la part des dispositifs compatibles seulement avec le WiFi. Cependant, la facturation et la sécurité exigent des mises à jour matérielles et logicielles liées au module WiFi du drone. Les mises à jour doivent être faites au niveau du réseau cœur pour le système de facturation, et au niveau du drone pour assurer la sécurisation des communications. De plus, les interférences dans la bande WiFi ne peuvent pas être contrôlées en raison de la large utilisation de cette bande non-licenciée dans d'autres domaines, tels que les domaines médicaux, scientifiques et industriels. De préférence, on n'utilisera donc le WiFi qu'en cas d'insuffisance de ressources dans le spectre licencié.

Concernant justement le spectre licencié, on utilisera de préférence le TDD (initiales des mots anglais « *Time Division Duplexing* » signifiant « Duplexage en Temps ») pour les communications entre le drone et les terminaux mobiles, car (comme il est connu de l'Homme du Métier) le TDD fonctionne efficacement pour les communications sur de petites distances, d'autant que la plupart des opérateurs ont investi dans l'achat d'une bande de fréquences licenciée en TDD, même si toutes ces bandes ne sont pas exploitées (d'où un gaspillage de ressources). Grâce à l'utilisation de ces bandes, on aura moins d'interférences dans les bandes FDD, les performances globales du système seront améliorées, et l'on fera un usage efficace des ressources radio disponibles.

Quand la cellule n'est pas congestionnée (Cell_Load < Load_Threshold_1, état de congestion Vert), le drone est dans le mode Inactif.

Selon une étape S1, la station de base détecte qu'un ensemble de terminaux mobiles subissent de mauvaises conditions radio.

Quand le taux de congestion dans la cellule est supérieur à un premier seuil prédéterminé, mais est inférieur à un second seuil prédéterminé (Load_Threshold_1 < Cell_Load < Load_Threshold_2), la station de base déclenche un évènement event_DA1, et exécute un algorithme de localisation de *hotspot* pour estimer la position du *hotspot* causant cette congestion de trafic. Si l'algorithme détermine que la position du *hotspot* se trouve près de la station de base (Hotspot_position < Hotspot_0), le drone ne sera pas notifié de cet événement, car (comme mentionné ci-dessus) le déploiement d'un relais répéteur tout près d'une station de base peut causer une dégradation des performances globales du système. En revanche, si le *hotspot* n'est pas situé près de la station de base (Hotspot_position > Hotspot_0, LoadThreshold_1 < Cell_Load < Load_Threshold _2, état de congestion Jaune), la station de base envoie un message à un drone pour lui notifier de passer en mode de Veille.

Selon une étape S2, la station de base teste l'aggravation de la congestion.

Après la confirmation de l'existence d'un *hotspot* (i.e., Cell_Load > Load_Threshold_1), la station de base initie l'exécution périodique (avec une période Timer_1) d'un algorithme de localisation de *hotspot,* afin de prévoir le profil de mobilité du *hotspot.* Ensuite, si le taux de congestion Cell_Load devient supérieur audit second seuil Load_Threshold_2, et si l'emplacement du *hotspot* est toujours éloigné de la station de base (Cell_Load > Load_Threshold_2, Hotspot_position > Hotspot_0, état de congestion Rouge), la station de base attend l'expiration de Timer_2, et vérifie alors si les conditions (Cell_Load > Load_Threshold_2, Hotspot_position > Hotspot_0) sont toujours satisfaites.

Selon une étape S3, la station de base teste la persistance du *hotspot.*

Après l'expiration de Timer_2, si la distance au *hotspot* devient plus petite que le seuil de distance (Hotspot_position < Hotspot_0), la station de base attend jusqu'à l'expiration de Timer_3. Ensuite, si Hotspot_position est toujours inférieur à Hotspot_0, la station de base donne instruction au drone de passer en mode Inactif.

De même, si le taux de congestion a diminué (Cell_Load < Load_Threshold_1) à l'expiration de Timer_2, la station de base donne instruction au drone de passer en mode Inactif.

Si (Hotspot_position > Hotspot_0) et (Load_Threshold_1 < Cell_Load < Load_Threshold_2), Timer_2 est déclenché de nouveau, et la station de base attend son expiration. La station de base vérifie alors si ces deux conditions (Hotspot_position > Hotspot_0, et Load Threshold_1 < Cell_Load < Load_Threshold_2) sont toujours satisfaites.

Si en revanche, à l'expiration de Timer_2, les conditions (Cell_Load > Load_Threshold_2) et (Hotspot_position > Hotspot_0) sont satisfaites, la station de base déclenche un évènement event_DA2, ce qui signifie qu'elle requiert l'intervention d'un drone de la flotte pour délester la zone congestionnée de la cellule.

Dans ce dernier cas, selon une étape S4, la station de base dépêche un drone vers le *hotspot.*

La station de base envoie à un drone de la flotte un message d'activation contenant une identification (par exemple, valeur de l'indice i dans Traffic_Point_i) de l'emplacement de stationnement où le drone doit se rendre. Sur la base de ces informations, le drone passe en mode Actif, et se déplace vers l'emplacement de stationnement indiqué dans le message d'activation. Comme expliqué ci-dessus, cette position est déterminée de manière à minimiser la distance avec le *hotspot* et à avoir ce dernier en ligne de mire.

La station de base essaie en outre de prévoir le profil de mobilité des terminaux mobiles du *hotspot,* afin que le drone puisse se déplacer et se poser à une nouvelle position, de façon à servir la plupart des terminaux mobiles du *hotspot* pendant la durée la plus longue possible. C'est pourquoi la station de base exécute périodiquement l'algorithme de localisation de *hotspot* (tous les Timer_1), tant que le drone est en mode Actif.

Selon une étape S5, la station de base configure un certain nombre de paramètres.

Après l'atterrissage à la position adéquate, le drone passe en mode Prêt. On effectue alors une configuration de paramètres de la cellule dans l'esprit des technologies de Réseaux Auto-Organisants (« Self-Organizing Networks », ou SON, en anglais), de la façon suivante.

Les paramètres de sélection et de *handover* (Selection_offset_D, Handover_hysterisis et Handover_offset_D) sont auto-configurés de façon à absorber plus de trafic, et à pouvoir mettre en œuvre rapidement le *handover* vers le relais. La valeur du paramètre Handover_hysterisis entre la cellule et le drone est augmentée afin que le drone prenne rapidement en charge les terminaux mobiles situés dans le *hotspot.* En même temps, la valeur du paramètre Handover_offset_D du drone est augmentée afin que les terminaux mobiles attachés au drone restent attachés plus longtemps. Le paramètre Selection_offset_D est augmenté afin que le relais prenne en charge les nouvelles communications initiées par des terminaux mobiles situés dans le hotspot.

Selon une étape S6, le drone ordonnance les terminaux mobiles du hotspot.

Le drone exécute un algorithme d'ordonnancement, dont le but est de maximiser le nombre (N_UE) de terminaux mobiles servis par le drone, en utilisant le plus possible de ressources (N_PRB) pouvant lui être allouées. La mise au point de cet algorithme d'ordonnancement peut par exemple être formulée comme un problème de « sac à dos » (cf. l'article de S. Martello et al. intitulé « Algorithms for knapsack problems », Annals of Discrete Mathematics n° 31, pages 213 à 258, 1987), et plus précisément comme un « problème de sac à dos local » car l'algorithme ne concerne que les terminaux mobiles servis par le drone. Ce problème n'est pas très complexe par rapport à l'ordonnancement réalisé par la station de base si le nombre de terminaux mobiles connectés au drone est faible.

Enfin, selon une étape S7, la station de base vérifie l'évolution de l'état de la cellule.

Une fois que, grâce à la mise en place du relais, le taux de congestion dans la cellule, estimé avec les ressources du drone, a baissé jusqu'à devenir inférieur à un certain seuil (Cell_Load < Load_Threshold_3), un évènement event_DA3 est déclenché, et Timer_4 est activé pour tester si l'état de congestion dans la cellule reste bas de manière stable.

Si, à l'expiration de Timer_4, la condition (Cell_Load < Load_Threshold_3) persiste, cela signifie que la station de base peut, sans utiliser de drone, servir tout le trafic produit à l'intérieur de la région couverte par la station de base. Par conséquent, l'état de congestion de la cellule passe à Bleu, et la station de base envoie un message de désactivation au drone. Les paramètres de sélection et de *handover* (Selection_offset_D, Handover_hysterisis, Handover_offset_D) sont alors reconfigurés de façon à ce que les communications relayées par le drone soient transférées vers des communications directes avec la station de base.

Le drone attend ensuite en mode Prêt jusqu'à l'expiration de Timer_5. Si, à l'expiration de Timer_5, l'état de congestion dans la cellule est toujours Bleu, il bascule ensuite en Vert et le drone passe en mode Inactif si son niveau de batterie est supérieur à un seuil prédéterminé (suffisant pour une prochaine mission), ou si son emplacement de stationnement dispose d'un équipement de ravitaillement ; sinon, le drone passe d'abord en mode Actif, et se déplace vers l'endroit le plus proche où une aire de ravitaillement est disponible ; puis, une fois posé à cet endroit, le drone passe en mode Inactif.

Si, en revanche, Cell_Load devient plus grand que Load_Threshold_3 à l'expiration de Timer_4, le drone reste en mode Prêt et continue à servir des terminaux mobiles, et la cellule reste dans l'état de congestion Rouge.

On va étudier à présent deux situations particulières.

Une première situation particulière est celle où le *hotspot* s'approche de la station de base.

Si le *hotspot* s'approche de la station de base (Hotspot_position < Hotspot_0), un évènement event_DA3 est déclenché et le drone attend le prochain rapport de localisation de *hotspot,* qui est produit chaque Timer_1.

Si la condition (Hotspot_position < Hotspot_0) reste vérifiée, l'état de congestion de la cellule passe au Vert. Le drone passe alors en mode Inactif si son niveau de batterie est supérieur à un seuil prédéterminé (suffisant pour une prochaine mission), ou si son emplacement de stationnement dispose d'un équipement de ravitaillement ; sinon, le drone passe d'abord en mode Actif, et se déplace vers l'endroit le plus proche où une aire de ravitaillement est disponible ; puis, une fois posé à cet endroit, le drone passe en mode Inactif.

Si, en revanche, la condition (Hotspot_position < Hotspot_0) n'est plus vérifiée, le drone continue à servir des terminaux mobiles en mode Prêt, et la cellule reste dans l'état de congestion Rouge.

Une deuxième situation particulière est celle où le *hotspot* se déplace vers une nouvelle cellule, adjacente à la cellule initiale.

Dans ce cas, un évènement event_DA4 est déclenché et un message d'alerte est envoyé à la nouvelle cellule pour l'informer de l'arrivée du *hotspot.* La nouvelle cellule exécute les étapes décrites ci-dessus sur la base de de son état de congestion et de mesures envoyées par la cellule initiale (principalement la position du *hotspot,* et la taille du *hotspot* en termes de nombre de terminaux mobiles N_UE et de nombre de ressources N_PRB requises). Pendant que la nouvelle station de base calcule la meilleure solution sans l'activer encore, si le rapport suivant (à l'expiration de Timer_1) de localisation de *hotspot* de la cellule initiale donne une position située dans la région de couverture de la cellule initiale, la nouvelle station de base n'active pas un de ses drones, et le drone de la cellule initiale reste en mode Prêt.

En revanche, si à l'expiration de Timer_1 le rapport de localisation de *hotspot* de la cellule initiale indique à nouveau que la position du *hotspot* est située dans la région de couverture de la nouvelle cellule, le drone traite encore temporairement le trafic jusqu'à l'expiration de Timer_6, de façon à permettre à la nouvelle cellule d'activer l'un de ses propres drones si elle est congestionnée.

Une fois qu'un message a été envoyé à la cellule initiale l'informant que la nouvelle cellule est prête à servir le *hotspot* créé par les terminaux mobiles entrants, la valeur du paramètre Handover_offset_D du drone de la cellule initiale est diminuée, afin que les terminaux mobiles précédemment servis par le premier drone se connectent à la nouvelle station de base, directement ou *via* un drone de la nouvelle cellule. Le paramètre Selection_offset_D du drone de la cellule initiale est diminué, afin que ce drone devienne inaccessible aux terminaux mobiles qui se sont déplacés vers la nouvelle cellule et veulent initialiser une communication. Ensuite, la station de base initiale envoie un message à son drone, soit pour l'informer de la position suivante vers laquelle il doit se déplacer pour servir un nouveau *hotspot,* soit pour lui donner instruction de passer en mode de Veille ou Inactif. Le paramètre Handover_hysterisis entre la cellule et le drone est réinitialisé.

L'invention peut être mise en œuvre au sein de nœuds de réseaux de communication, par exemple des stations de base ou des drones servant de relais mobiles, au moyen de composants logiciels et/ou matériels.

Les composants logiciels pourront être intégrés à un programme d'ordinateur classique de gestion de nœud de réseau. C'est pourquoi, comme indiqué ci-dessus, la présente invention concerne également un système informatique. Ce système informatique comporte de manière classique une unité centrale de traitement commandant par des signaux une mémoire, ainsi qu'une unité d'entrée et une unité de sortie. De plus, ce système informatique peut être utilisé pour exécuter un programme d'ordinateur comportant des instructions pour la mise en œuvre de l'un quelconque des procédés de délestage de trafic selon l'invention.

En effet, l'invention vise aussi un programme d'ordinateur téléchargeable depuis un réseau de communication comprenant des instructions pour l'exécution des étapes d'un procédé de délestage de trafic selon l'invention, lorsqu'il est exécuté sur un ordinateur. Ce programme d'ordinateur peut être stocké sur un support lisible par ordinateur et peut être exécutable par un microprocesseur.

Ce programme peut utiliser n'importe quel langage de programmation, et se présenter sous la forme de code source, code objet, ou de code intermédiaire entre code source et code objet, tel que dans une forme partiellement compilée, ou dans n'importe quelle autre forme souhaitable.

L'invention vise aussi un support d'informations, inamovible, ou partiellement ou totalement amovible, lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comprendre un moyen de stockage, tel qu'une ROM, par exemple un CD ROM ou une ROM de circuit microélectronique, ou un moyen d'enregistrement magnétique, tel qu'un disque dur, ou encore une clé USB (« *USB flash drive* » en anglais).

D'autre part, le support d'informations peut être un support transmissible tel qu'un signal électrique ou optique, qui peut être acheminé *via* un câble électrique ou optique, par radio ou par d'autres moyens. Le programme d'ordinateur selon l'invention peut être en particulier téléchargé sur un réseau de type Internet.

En variante, le support d'informations peut être un circuit intégré dans lequel le programme est incorporé, le circuit étant adapté pour exécuter ou pour être utilisé dans l'exécution de l'un quelconque des procédés de délestage de trafic selon l'invention.

## Revendications

1. Procédé de délestage du trafic de communications dans un réseau mobile, comprenant les étapes suivantes :
- une station de base détecte une congestion persistante dans une zone de la cellule dont elle assure la couverture, et
- la station de base dépêche vers ladite zone au moins un relais de télécommunications mobile, ledit relais mobile étant porté par un drone.

2. Procédé de délestage de trafic selon la revendication 1, dans lequel, suite à l'atterrissage dudit drone près de ladite zone congestionnée, au moins un paramètre de la station de base et/ou dudit relais est configuré de manière à ce que le drone prenne en charge les terminaux mobiles situés dans la zone congestionnée.

3. Procédé de délestage de trafic selon la revendication 2, dans lequel, suite à la prise en charge desdits terminaux mobiles, le drone exécute un algorithme d'ordonnancement de ces terminaux mobiles.

4. Procédé de délestage de trafic selon l'une quelconque des revendications 1 à 3, dans lequel la station de base met fin au rôle de relais joué par le drone lorsqu'elle constate une disparition persistante de ladite congestion.

5. Procédé de délestage de trafic selon la revendication 4, dans lequel, lorsque son rôle de relais vis-à-vis de ladite zone congestionnée prend fin, le drone se dirige vers une aire de ravitaillement.

6. Drone comprenant un relais de télécommunications mobile, et comprenant en outre des moyens pour :
- recevoir de la part d'une station de base un message d'activation contenant une identification d'un emplacement de stationnement où ledit drone doit se rendre,
- se déplacer vers l'emplacement de stationnement indiqué dans ledit message d'activation, et
- suite à son atterrissage, prendre en charge les terminaux mobiles situés près dudit emplacement de stationnement.

7. Drone selon la revendication 6, adapté à garder en mémoire un ensemble planifié d'emplacements de stationnement possibles (Traffic_Point_i) pour exercer ses fonctions de relais.

8. Drone selon la revendication 6 ou la revendication 7, comprenant des moyens pour exécuter un algorithme d'ordonnancement des terminaux mobiles dont il a la charge.

9. Station de base, comprenant des moyens pour détecter une congestion persistante dans une zone de la cellule dont elle assure la couverture, et comprenant en outre des moyens pour :
- dépêcher vers ladite zone congestionnée un drone comprenant un relais de télécommunications mobile, et
- configurer au moins un de ses paramètres et/ou des paramètres dudit relais de manière à ce que le relais prenne en charge les terminaux mobiles situés dans la zone congestionnée.

10. Système de délestage du trafic de communications dans un réseau mobile, comprenant :
- au moins un drone selon l'une quelconque des revendications 6 à 8, et
- au moins une station de base selon la revendication 9.

11. Moyen de stockage de données inamovible, ou partiellement ou totalement amovible, comportant des instructions de code de programme informatique pour l'exécution des étapes d'un procédé de délestage de trafic selon l'une quelconque des revendications 1 à 5.

12. Programme d'ordinateur téléchargeable depuis un réseau de communication et/ou stocké sur un support lisible par ordinateur et/ou exécutable par un microprocesseur, comprenant des instructions pour l'exécution des étapes d'un procédé de délestage de trafic selon l'une quelconque des revendications 1 à 5, lorsqu'il est exécuté sur un ordinateur.

## Patentansprüche

1. Verfahren zum Offloading des Verkehrs von Kommunikationen in einem Mobilnetz, umfassend die folgenden Schritte:
- eine Basisstation erkennt eine anhaltende Überlastung in einem Bereich der Zelle, deren Abdeckung sie sicherstellt, und
- die Basisstation entsendet mindestens ein mobiles Telekommunikationsrelais zu dem Bereich, wobei das mobile Relais von einer Drohne getragen wird.

2. Verfahren zum Offloading von Verkehr nach Anspruch 1, wobei
nach der Landung der Drohne in der Nähe des überlasteten Bereichs mindestens ein Parameter der Basisstation und/oder des Relais so konfiguriert wird, dass die Drohne die Zuständigkeit für die mobilen Endgeräte übernimmt, die sich in dem überlasteten Bereich befinden.

3. Verfahren zum Offloading von Verkehr nach Anspruch 2, wobei nach der Übernahme der Zuständigkeit für die mobilen Endgeräte die Drohne einen Algorithmus zur Einteilung dieser mobilen Endgeräte ausführt.

4. Verfahren zum Offloading von Verkehr nach einem der Ansprüche 1 bis 3, wobei die Basisstation die Relais-Rolle beendet, die von der Drohne gespielt wird, wenn sie einen anhaltenden Wegfall der Überlastung feststellt.

5. Verfahren zum Offloading von Verkehr nach Anspruch 4, wobei sich die Drohne zu einem Versorgungsplatz bewegt, wenn ihre Relais-Rolle gegenüber dem überlasteten Bereich endet.

6. Drohne umfassend ein mobiles Telekommunikationsrelais und ferner umfassend Mittel, um:
- von einer Basisstation eine Aktivierungsmeldung zu empfangen, die eine Identifikation eines Parkplatzes enthält, zu dem sich die Drohne begeben soll,
- sich zu dem Parkplatz zu bewegen, der in der Aktivierungsmeldung angegeben ist, und
- nach ihrer Landung die Zuständigkeit für die mobilen Endgeräte zu übernehmen, die sich in der Nähe des Parkplatzes befinden.

7. Drohne nach Anspruch 6, die geeignet ist, eine geplante Anordnung möglicher Parkplätze (Traffic_Point_i) im Speicher zu behalten, um ihre Relaisfunktionen auszuüben.

8. Drohne nach Anspruch 6 oder 7, umfassend Mittel zur Ausführung eines Algorithmus zur Einteilung der mobilen Endgeräte, für die sie zuständig ist.

9. Basisstation, umfassend Mittel zur Erkennung einer anhaltenden Überlastung in einem Bereich der Zelle, deren Abdeckung sie sicherstellt,
und ferner umfassend Mittel zur:
- Entsendung einer Drohne, die ein mobiles Telekommunikationsrelais umfasst, zu dem überlasteten Bereich, und
- Konfiguration mindestens eines ihrer Parameter und/oder der Parameter des Relais, damit das Relais die Zuständigkeit für die mobilen Endgeräte übernimmt, die sich in dem überlasteten Bereich befinden.

10. System zum Offloading des Verkehrs von Kommunikationen in einem Mobilnetz, umfassend:
- mindestens eine Drohne nach einem der Ansprüche 6 bis 8, und
- mindestens eine Basisstation nach Anspruch 9.

11. Datenspeichermittel, das nicht entfernbar, teilweise entfernbar oder vollständig entfernbar ist, aufweisend Computerprogrammcode-Anweisungen zur Ausführung der Schritte eines Verfahrens zum Offloading von Verkehr nach einem der Ansprüche 1 bis 5.

12. Computerprogramm, das aus einem Kommunikationsnetzwerk herunterladbar ist und/oder auf einem computerlesbaren Datenträger gespeichert ist und/oder von einem Mikroprozessor ausführbar ist, aufweisend Anweisungen zur Ausführung der Schritte eines Verfahrens zum Offloading von Verkehr nach einem der Ansprüche 1 bis 5, wenn es auf einem Computer ausgeführt wird.

## Claims

1. Method for offloading communications traffic in a mobile network, comprising the following steps:
- a base station detects persistent congestion in a zone of the cell for which it provides coverage, and
- the base station dispatches at least one mobile telecommunications relay to said zone,
said mobile relay being carried by a drone.

2. Method for offloading traffic according to Claim 1, wherein, after said drone has landed near said congested zone, at least one parameter of the base station and/or of said relay is configured so that the drone takes charge of the mobile terminals located in the congested zone.

3. Method for offloading traffic according to Claim 2, wherein, after taking charge of said mobile terminals, the drone executes a scheduling algorithm for scheduling these mobile terminals.

4. Method for offloading traffic according to any one of Claims 1 to 3, wherein the base station ends the relay role played by the drone when said base station observes a persistent disappearance of said congestion.

5. Method for offloading traffic according to Claim 4, wherein, when the role of the drone as a relay for said congested zone ends, the drone heads to a re-provisioning area.

6. Drone comprising a mobile telecommunications relay, and further comprising means for:
- receiving, from a base station, an activation message containing an identifier of a docking space to which said drone must go,
- travelling to the docking space indicated in said activation message, and
- after the drone has landed, taking charge of the mobile terminals located near said docking space.

7. Drone according to Claim 6, which is suitable for storing in memory a planned set of possible docking spaces (Traffic_Point_i) for performing its relay functions.

8. Drone according to Claim 6 or Claim 7, comprising means for executing a scheduling algorithm for scheduling the mobile terminals for which it is responsible.

9. Base station comprising means for detecting a persistent congestion in a zone of the cell for which it provides coverage, and further comprising means for:
- dispatching a drone comprising a mobile telecommunications relay to said congested zone, and
- configuring at least one of the parameters of said base station and/or of the parameters of said relay so that the relay takes charge of the mobile terminals located in the congested zone.

10. System for offloading communications traffic in a mobile network, comprising:
- at least one drone according to any one of Claims 6 to 8, and
- at least one base station according to Claim 9.

11. Irremovable, or partially or completely removable, data storage means including computer program code instructions for executing the steps of a method for offloading traffic according to any one of Claims 1 to 5.

12. Computer program that is downloadable from a communication network and/or stored on a computer-readable medium and/or executable by a microprocessor, comprising instructions for executing the steps of a method for offloading traffic according to any one of Claims 1 to 5 when it is executed on a computer.
